# EUROPÄISCHE PATENTANMELDUNG

(11) **EP 2 388 852 A1**
(43) Veröffentlichungstag der Anmeldung: **23.11.2011**
(21) Anmeldenummer: 11166479.3
(22) Anmeldetag: 18.05.2011
(51) Int. Cl.: H01M 10/50, F28F 3/12

(54) **Kühlvorrichtung und Verfahren zum Herstellen einer Kühlvorrichtung**

(30) Priorität: 18.05.2010 DE 102010029079
(71) Anmelder: Behr GmbH & Co. KG, 70469 Stuttgart (DE)
(72) Erfinder: Ludwig, Lars, 73733 Esslinger (DE); Moser, Michael, 73492 Rainau (DE); Zahn, Christian, 01129 Dresden (DE)
(74) Vertreter: Grauel, Andreas

(57) **Zusammenfassung**

Die vorliegende Erfindung betrifft eine Kühlvorrichtung zur Kühlung elektrischer Komponenten. Die Kühlvorrichtung weist eine Mehrzahl von Kühlkörpern (102) auf, die jeweils mindestens einen Fluidkanal (106) und an gegenüberliegenden Randbereichen jeweils eine Formschlussstruktur aufweisen. Die Kühlkörper (102) sind benachbart zueinander angeordnet und jeweils über einander gegenüberliegende Formschlussstrukturen der Kühlkörper(102) mittels einer Formschlussverbindung miteinander verbunden.

## Beschreibung

Die vorliegende Erfindung bezieht sich auf eine Kühlvorrichtung und auf ein Verfahren zum Herstellen einer Kühlvorrichtung, die zur Kühlung elektrischer Komponenten, beispielsweise einer Fahrzeugbatterie, eingesetzt werden kann.

Die DE 10 2008 027 293 A1 betrifft eine Vorrichtung zur Kühlung einer Fahrzeugbatterie mit einem Kühlkörper mit Kanälen zur Durchströmung mit einem Fluid. Der die Kanäle umfassende Kühlkörper kann als zumindest ein Strangpressprofil ausgebildet sein. Gemäß einer Ausführungsform können mehrere separate Strangpressprofile an den gleichen Sammler aufgenommen sein,

Es ist die Aufgabe der vorliegenden Erfindung eine verbesserte Kühlvorrichtung und ein verbessertes Verfahren zum Herstellen einer Kühlvorrichtung zu schaffen.

Diese Aufgabe wird durch eine Kühlvorrichtung gemäß Anspruch 1 sowie ein Verfahren zum Herstellen einer Kühlvorrichtung gemäß Anspruch 4 gelöst,

Kern der Erfindung ist ein Einsatz eines skalierbaren Kühlersystems. Ein skalierbarer Kühler kann ausgebildet sein, um über ein geeignetes Fluid elektrische Komponenten zu kühlen. Dabei können Fluidleitungen zum Leiten des Fluids, speziell Extrusionsprofile, Fluidrohre oder Rohre aus Metall oder Kunststoff, über eine Formschlussverbindung zwischeneinander sowie durch eine Kontur von Sammlern des Kühlers gefügt sein. Hierbei kann durch eine Anzahl der Fluidleitungen sowie durch eine Länge der Fluidleitungen eine gewünschte Dimensionierung gewählt werden. Die Fluidleitungen selbst verfügen über einen Formschluss, welcher es ermöglicht mehrere Fluidleitungen miteinander zu verbinden. Zusätzlich können weitere Profile mit Funktionen, wie z.B. Befestigung, Strukturaufgaben oder Aufnahme weiterer Bauteile, mit den Fluidleitungen kombiniert werden. Somit besteht eine Ausführungsform der Erfindung in einem Strangpressprofilkühler mit Formschluss.

Durch die erfindungsgemäße Kühlvorrichtung können komplexe Kühler und deren aufwendige Herstellungsverfahren vermieden werden. Insbesondere kann eine kostenintensive Herstellung von Kühlereinzeiteilen und des Kühlers selbst, die mit hohen spezifischen Investitionskosten verbunden ist, durch eine kostengünstigere Vorgehensweise ersetzt werden.

Vorteilhafterweise ergibt sich neben einer Kostenreduzierung durch den Einsatz günstiger Verfahren ein Gewichtsvorteil durch einen geringen Materialeinsatz sowie eine Reduzierung passiver, thermischer Masse. Ferner sind ein flexibler Aufbau des Kühlerblocks und eine Integration verschiedener Funktionen innerhalb eines Systems möglich.

Die vorliegende Erfindung schafft eine Kühlvorrichtung zur Kühlung elektrischer Komponenten, mit folgenden Merkmalen: einer Mehrzahl von Kühlkörpern, die jeweils mindestens einen Fluidkanal und an gegenüberliegenden Randbereichen jeweils eine Formschlussstruktur aufweisen, wobei die Kühlkörper benachbart zueinander angeordnet sind und jeweils über einander gegenüberliegende Formschlussstrukturen der Kühlkörper mittels einer Formschlussverbindung und/oder einer Stoffschlussverbindung miteinander verbunden sind.

Bei den elektrischen Komponenten kann es sich um eine oder mehrere Batterien oder Akkumulatoren handeln. Beispielsweise kann es sich um in einem Fahrzeug, insbesondere in einem Elektro- oder Hybridfahrzeug, angeordnete Batterien handeln. Die elektrischen Komponenten können im thermischen Kontakt mit der Kühlvorrichtung stehen. Insbesondere können die elektrischen Komponenten auf einer Oberfläche der Mehrzahl von Kühlkörpern angeordnet sein, so dass ein Wärmeaustausch zwischen den elektrischen Komponenten und einem in den Fluidkanälen fließenden Fluid möglich ist. Alternativ kann die Kühlvorrichtung auch zur Kühlung beliebiger anderer Komponenten eingesetzt werden. Ferner kann die Kühlvorrichtung auch als Temperiervorrichtung oder Heizvorrichtung eingesetzt werden, wenn die Fluidkanäle mit einem entsprechend temperierten Fluid durchflossen werden. Bei dem Fluid kann es sich um ein wärmeübertragendes Fluid, insbesondere um ein Kühlmittel eines Kühlkreislaufs handeln. Alternativ oder ergänzend kann das Fluid auch ein Kältemittel eines Kältekreises sein, wobei die Kühlvorrichtung als Verdampfer für das Kältemittel ausgebildet sein kann. Das Fluid kann die Fluidkanäle der Mehrzahl von Kühlkörpern parallel durchströmen. Die Fluidkanäle können als Rohre ausgeführt sein. Beispielsweise können die Fluidkanäle einen runden, eckigen oder trapezförmigen Querschnitt aufweisen. Jeder der Kühlkörper kann einen oder mehrere Fluidkanäle aufweisen, Im Falle mehrerer Fluidkanäle können diese parallel zueinander in einer Ebene angeordnet sein. Die Kühlkörper können aus einem gut wärmeleitenden Material, beispielsweise Metall, ausgeformt sein. Beispielsweise können die Kühlkörper als Extrusionsprofile ausgebildet sein. Bei den Randbereichen kann es sich um Seitenflächen der Kühlkörper handeln, die sich parallel zu einer Haupterstreckungsrichtung des oder der Fluidkanäle erstrecken. Die gegenüberliegenden Formschlussstrukturen eines Kühlkörpers können identisch, beispielsweise als Nut, ausgeformt sein. Alternativ können gegenüberliegende Formschlussstrukturen eines Kühlkörpers gegengleich ausgeformt sein, beispielsweise als Nut und Feder. Mittels der Formschlussstrukturen können benachbarte Kühlkörper direkt zusammengefügt werden, so dass eine formschlüssige Verbindung ausgebildet wird. Das Zusammenfügen kann als eine Spundung ausgeführt werden. Die Formschlussverbindung kann unlösbar oder lösbar ausgeführt sein. Eine Ausdehnung der Kühlvorrichtung quer zu der Haupterstreckungsrichtung der Fluidkanäle kann durch die Anzahl der eingesetzten Kühlköper eingestellt werden.

Ferner kann die Kühlvorrichtung mindestens einen Sammler aufweisen. Der Sammler kann mindestens eine Öffnung aufweisen und so mit zumindest zweien der Mehrzahl von Kühlkörpern verbunden sein, das jeweilige Endabschnitte der Fluidkanäle der zumindest zwei Kühlkörper in der mindestens einen Öffnung münden. Der Sammler kann als Sammelkasten ausgebildet sein. Der Sammler kann einen Innenraum aufweisen, aus dem das Fluid in die Fluidkanäle strömen kann oder in den das Fluid, von den Fluidkanälen kommend, strömen kann. Der Sammler kann eine Schnittstelle zwischen der Kühlvorrichtung und einer Verbindungsleitung eines Kühlkreislaufes bilden. Die Kühlvorrichtung kann zwei gegenüberliegend angeordnete Sammler aufweisen, so dass das Fluid aus einem der Sammler heraus in die Kühlkörper hineinströmen kann und aus den Kühlkörpern wiederum in den anderen der Sammler strömen kann. Dazu kann für jeden der Kühlkörper eine Öffnung in dem Sammler vorgesehen sein. Endbereiche der Kühlkörper können in die jeweilige Öffnung des Sammlers eingeführt sein.

Die vorliegende Erfindung schafft ferner ein Verfahren zum Herstellen einer Kühlvorrichtung zur Kühlung elektrischer Komponenten, das die folgenden Schritte umfasst: Bereitstellen einer Mehrzahl von Kühlkörpern, die jeweils mindestens einen Fluidkanal und an parallel zu einer Haupterstreckungsrichtung des mindestens einen Fluidkanals verlaufenden Randbereichen jeweils eine Formschlussstruktur aufweisen; Anordnen der Mehrzahl von Kühlkörpern benachbart zueinander; und Formschlüssiges und/oder Stoffschlüssiges Verbinden der Mehrzahl von Kühlkörpern jeweils über einander gegenüberliegende Formschlussstrukturen der Kühlkörper. Mittels des erfindungsgemäßen Verfahrens kann die Kühlvorrichtung durch ein Zusammenfügen der entsprechenden Einzelteile hergestellt werden. Neben der Mehrzahl von Kühlkörpern können zusätzliche Verbindungselemente, Sammler und/oder Zusatzelemente bereitgestellt werden, im Schritt des Anordnen zu in Bezug zu den Kühlkörpern angeordnet und mit diesen formschlüssig oder auf andere Art verbunden werden.

Vorteilhafte Ausführungsbeispiele der vorliegenden Erfindung werden nachfolgend Bezug nehmend auf die beiliegenden Zeichnungen näher erläutert. Es zeigen:

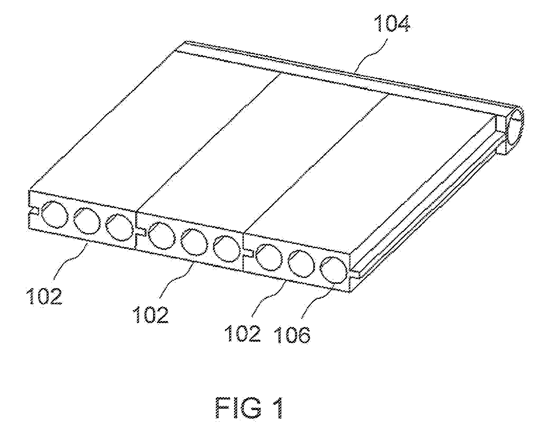

- Fig. 1: eine Darstellung einer erfindungsgemäßen Kühlvorrichtung;

Fig. 1 zeigt eine Kuhlvorrichtung gemäß einem Ausführungsbeispiel der vorliegenden Erfindung. Die Kühlvorrichtung weist drei Kühlkörper 102 und einen Sammler 104 auf. Die Kühlkörper 102 weisen jeweils Kühlkanäle 106 auf, von denen in Fig. 1 lediglich einer mit einem Bezugszeichen versehen ist. Gemäß diesem Ausführungsbeispiel weist jeder der Kühlkörper 102 drei Kühlkanäle 106 auf. Die Kühlkanäle 106 sind in einer Ebene nebeneinander angeordnet. Die Kühlkörper 102 sind gemäß diesem Ausführungsbeispiel als rechteckförmige Platten ausgebildet. Beispielsweise können die Kuhlkörper 102 jeweils als ein Extrusionsprofil ausgebildet sein. Die Kuhlkörper 102 sind entlang ihrer Längsseite nebeneinander angeordnet und über Formschlussstrukturen miteinander verbunden. Jeder der Kühlkörper 102 weist an einem Randbereich eine erste Formschlussstruktur und an einem gegenüberliegenden Randbereich eine zweite Formschlussstruktur auf. Die Randbereiche kennzeichnen diejenigen Seitenflächen der Kühlkörper 102 an der benachbarte Kühlkörper 102 aneinandergrenzen. Gemäß diesem Ausführungsbeispiel ist die erste Formschlussstruktur als Einbuchtung in Form einer Nut und die zweite Formschlussstruktur als Ausbuchtung in Form einer Feder ausgebildet. Die Einbuchtung und die Ausbuchtung können sich über eine Gesamtlänge der Randbereiche erstrecken. Dabei sind die Einbuchtung und die Ausbuchtung so ausgeformt, dass sie ineinander gesteckt oder geschoben werden können, um eine formschlüssige Verbindung herzustellen. Somit können benachbarte Kühlkörper 102 über eine Nut-Feder-Verbindung zusammengefügt werden. Der Sammler 104 erstreckt sich über Endbereiche der Kühlkörper 102 und kann mit diesen starr verbunden sein. Der Sammler 104 kann somit stirnseitig an den Kühlkörpern 102 angeordnet sein, so dass Enden der Kühlkanäle 106 in den Sammler 104 münden. Die Kühlvorrichtung kann um weitere Kühlkörper 102 erweitert werden. Ebenso kann dem Sammler 104 gegenüberliegend ein weiterer Sammler angeordnet sein, so dass die Kühlkörper 102 zwischen den Sammlern angeordnet und mit diesen verbunden sind.

Die in Fig. 1 gezeigte Kühlvorrichtung kann als ein Kühler aus Extrusionsprofilen 102 mit Formschluss und/oder Materialschluss ausgebildet sein.

Gemäß einem Ausführungsbeispiel besteht ein erfindungsgemäßer Kühler aus mindestens einem Strangpressprofil 102 und mindestens einem Sammlerprofil 104. Diese bilden die Fluidführung innerhalb des Kühlers. Die Strangpressprofile 102 können verschiedene Funktionen wie z.B. Fluidführung. Befestigung oder Strukturaufgaben beinhalten.

Über einen Formschluss werden die Strangpressprofile 102 miteinander gefügt. Desweiteren können zur thermischen Anbindung Übertragerbleche an den fluidführenden Profilen 102 eingesetzt werden. Durch einen weiteren Prozess wie z.B. Kleben oder Löten können die Profile 102 dauerhaft miteinander verbunden werden.

Die Verbindung zwischen Sammlerprofil 104 und Strangpressprofil 102 kann über Stoffschluss, Formschluss oder weitere Bauteile wie z.B. Dichtungen sichergestellt werden. Der Wärmeübergang zwischen Fluid und Oberfläche des Kühlers kann variabel gestaltet sein. Generell sind verschiedene Durchströ-mungsarten möglich. Beispielsweise I-, U-, S-, W-Flow oder eine Durchströmung mit mehreren Umlenkungen.

Verschiedene Anschlusstypen an den Kühler sind möglich, wie z.B. Schlauchstutzen, Einschraubstutzen oder Schnellkupplungsanschlüsse. Die Verbundplatte ermöglicht mehrere Fluidanschlüsse (1 bis X). Die Anschlusstypen können an dem Sammler 104 umgesetzt werden.

## Patentansprüche

1. Kühlvorrichtung zur Kühlung elektrischer Komponenten, mit folgenden Merkmalen:
einer Mehrzahl von Kühlkörpern (102), die jeweils mindestens einen Fluidkanal (106) und an gegenüberliegenden Randbereichen jeweils eine Formschlussstruktur aufweisen, wobei die Kühlkörper benachbart zueinander angeordnet sind und jeweils über einander gegenüberliegende Formschlussstrukturen der Kühlkörper mittels einer Formschlussverbindung und/oder Stoffschlussverbindung miteinander verbunden sind.

2. Kühlvorrichtung gemäß Anspruch 1, mit mindestens einem Sammler (104) der mindestens eine Öffnung aufweist, wobei der Sammler so mit zumindest zweien der Mehrzahl von Kühlkörpern (102) verbunden ist, das jeweilige Endabschnitte der Fluidkanäle der zumindest zwei Kühlkörper in der mindestens einen Öffnung münden

3. Kühlvorrichtung gemäß einem der voran gegangenen Ansprüche, **dadurch gekennzeichnet, dass** die Mehrzahl von Kühlkörpern als Extrusionsprofile, insbesondere aus Metall oder Kunststoff, ausgebildet sind.

4. Verfahren zum Herstellen einer Kühlvorrichtung zur Kühlung elektrischer Komponenten, das die folgenden Schritte umfasst:
Bereitstellen einer Mehrzahl von Kühlkörpern (102), die jeweils mindestens einen Fluidkanal (106) und an gegenüberliegenden Randbereichen jeweils eine Formschlussstruktur aufweisen;
Anordnen der Mehrzahl von Kühlkörpern benachbart zueinander; und
Formschlüssiges und/oder Stoffschlüssiges Verbinden der Mehrzahl von Kühlkörpern jeweils über einander gegenüberliegende Formschlussstrukturen der Kühlkörper.
